# EUROPÄISCHE PATENTSCHRIFT

(11) **EP 3 984 046 B1**
(45) Veröffentlichungstag und Bekanntmachung des Hinweises auf die Patenterteilung: **05.07.2023**
(21) Anmeldenummer: 20737358.0
(22) Anmeldetag: 20.05.2020
(51) Int. Cl.: G21C 15/18, G21D 3/04

(54) **REAKTORDRUCKBEHÄLTERKÜHLSYSTEM**
REACTOR PRESSURE VESSEL COOLING SYSTEM
SYSTÈME DE REFROIDISSEMENT DE CUVE DE RÉACTEUR SOUS PRESSION

(30) Priorität: 14.06.2019 DE 102019004244
(43) Veröffentlichungstag der Anmeldung: 20.04.2022
(73) Patentinhaber: Westinghouse Electric Germany GmbH, 68167 Mannheim (DE)
(72) Erfinder: SASSEN, Felix, 68163 Mannheim (DE); BIELIAUSKAS, Arunas, 1170 Brussels (BE); VUJIC, Zoran, 69123 Heidelberg (DE); RAPP, Wolfgang, 68219 Mannheim (DE); HARTMANN, Christoph, 76297 Stutensee (DE); ANCIAUX, Nicolas, 1200 Brussels (BE)
(74) Vertreter: Eickmeyer, Dietmar
(86) Internationale Anmeldenummer: PCT/EP2020/000097
(87) Internationale Veröffentlichungsnummer: WO 2020/249252

(56) Entgegenhaltungen:
- EP-A2- 0 476 563
- DE-A1- 2 346 483
- US-A- 5 096 659
- US-A- 5 295 169
- US-A1- 2010 260 302

## Beschreibung

Die Erfindung betrifft ein Reaktordruckbehälterkühlsystem einer kerntechnischen Anlage mit einem abgeschlossenen Sicherheitsbehälter, wobei innerhalb des Sicherheitsbehälters ein Reaktordruckbehälter angeordnet ist, wobei sich innerhalb des Sicherheitsbehälters ein Kühlmediumsammelbereich zur Aufnahme eines Kühlmediums befindet, und wobei zwischen dem Sicherheitsbehälter und dem Reaktordruckbehälter so viel Kühlmedium vorhanden ist, dass der Reaktordruckbehälter zumindest teilweise vom Kühlmedium umgeben ist.

Es ist allgemein bekannt, dass in kerntechnischen Anlagen eine Vielzahl an Vorkehrungen zum Schutz der Umwelt vor möglichen Schäden eines eventuellen Störfalls getroffen wird. Ein Störfall kann mit einer erhöhten Temperaturentwicklung innerhalb eines Kernreaktors einhergehen, wenn die vorgesehenen Kernreaktor-Sicherheitskühlsysteme ausfallen. In solchen Fällen wird die reaktorseitig erzeugte Wärmeenergie, beispielsweise die Nachzerfallsleistung, nicht in genügendem Maße abgeführt und es kann zu einer Überhitzung des Kernreaktors kommen.

Um auch im Störfall ein Höchstmaß an Sicherheit zu gewährleisten, ist ein Kernreaktor von einem hermetisch abgeschlossenen Sicherheitsbehälter beziehungsweise einem Containment umgeben, wodurch beispielsweise im Falle eines Bruchs von aktivitätführenden Systemen, im Falle von defekten Brennstäben oder im Falle einer Kettenreaktion die dabei möglicherweise freigesetzten radioaktiven Stoffe nicht in die Umgebung austreten können, sondern vielmehr in dem Sicherheitsbehälter zurückgehalten werden. Derartige Sicherheitsbehälter können beispielsweise in Form einer Betonglocke realisiert sein. Innerhalb eines Sicherheitsbehälters ist ein Kühlmediumsammelbereich oder ein sogenannter Reaktorsumpf beziehungsweise ein Sumpfbereich vorgesehen, in welchem bei einem eventuellen Störfall beispielsweise aus einem leckenden Kühlsystem austretendes radioaktiv kontaminiertes Kühlwasser gesammelt, bedarfsweise gekühlt und dem Kühlsystem beziehungsweise dem Reaktorkern oder auch anderen Systemen wieder zugeführt wird. Es existieren auch Schutzkonzepte, bei welchen ein Kernreaktor in einem Kühlmediumsammelbereich angeordnet ist, welcher im Störfall mit Kühlwasser geflutet wird, um eine erhöhte Kühlung des Kernreaktors zu erzielen, wobei auch hier das sich im Reaktorsumpf ansammelnde radioaktiv kontaminierte Kühlwasser gekühlt werden muss, beispielsweise mit einem Sicherheitsbehälterkühlsystem gemäß der deutschen Patentanmeldung DE 10 2017 008 254 A1. Der Stand der Technik ist weiterhin aus dem Dokument US 2010/260302 A1 bekannt.

Ein weiteres technisches Problem bei einem Störfall ist es, die Integrität, also die mechanische Stabilität sowie der Erhalt der materialtechnischen Eigenschaften eines Reaktordruckbehälters, nämlich der äußeren Hülle des Kernreaktors, zu erhalten. Hierfür ist das vorstehend genannte Fluten des Sicherheitsbehälters und damit des Reaktorsumpfes mit Kühlwasser ebenfalls gedacht. Auf diese Weise wird der Wärmeübergang und Wärmeabtransport von Wärme aus dem Reaktordruckbehälter auf das Kühlwasser verbessert im Vergleich von einem Wärmeübergang/Wärmeabtransport vom Reaktordruckbehälter auf die Umgebungsluft im Sicherheitsbehälter. Durch das Aufnehmen der Wärme durch das Kühlwasser steigt das erwärmte Kühlwasser nach oben und setzt so bestenfalls eine Naturkonvektion des Kühlwassers in Gang, die den Wärmeabtransport erhöht. Nachteilig bei diesem Stand der Technik ist es, dass für bestimmte Störfälle mit erhöhten Anfall von Wärme im Kernreaktor, zum Beispiel bei einer Kernschmelze, diese Art der Kühlung nicht mehr ausreicht, um die Integrität des Reaktordruckbehälters auf Dauer zu erhalten. Ausgehend von diesem Stand der Technik ist es Aufgabe der Erfindung, ein Reaktordruckbehälterkühlsystem anzugeben, mit dem die Kühlung eines Reaktordruckbehälters bei einem Störfall verbessert ist.

Die Aufgabe wird gelöst durch ein Reaktordruckbehälterkühlsystem der eingangs genannten Art. Diese ist dadurch gekennzeichnet, dass im Sicherheitsbehälter eine Pumpvorrichtung angeordnet ist, die vollständig im Kühlmedium eingetaucht ist, dass durch die Pumpvorrichtung Kühlmedium einer Düsenanordnung zugeführt ist, dass die Düsenvorrichtung eine Anzahl von Kühlmediumdüsen aufweist, und dass die Kühlmediumdüsen so angeordnet sind, dass durch das durch die Kühlmediumdüsen strömende Kühlmedium eine Kühlmediumzwangsströmung im Kühlmedium des Kühlmediumsammelbereichs erzeugt ist, durch welche Kühlmediumzwangsströmung ein Oberflächenbereich des Reaktordruckbehälters angeströmt ist.

Die Grundidee der Erfindung besteht darin, anstelle der bisherigen alleinigen Naturkonvektion nunmehr mittels einer Pumpvorrichtung eine Zwangsströmung im Kühlmedium zu erzeugen, die auf einen Oberflächenbereich des Reaktordruckbehälters gerichtet ist und derart den Wärmeabtransport vom Reaktordruckbehälter in das Kühlmedium im Vergleich zu den bisher bekannten Kühlsystemen erhöht. Die Kühlleistung beziehungsweise die Kühlung des Reaktordruckbehälters bei einem Störfall ist verbessert. Bei einem solchen Störfall, der für den Betrieb des erfindungsgemä-βen Reaktordruckbehälterkühlsystems unterstellt ist, wird der Sicherheitsbehälter, auch als Containment oder Confinement bezeichnet, mit Kühlmedium wenigstens zum Teil geflutet sein, wobei durch das Kühlmedium der Kühlmediumsammelbereich ausgebildet ist. Die Pumpvorrichtung ist bevorzugt geodätisch unterhalb eines geplanten Flüssigkeitsstandes des Kühlmediums nach dem Fluten im Sicherheitsbehälter angeordnet. Für den Betrieb des Reaktordruckbehälterkühlsystem ist es nämlich von Vorteil, dass die Pumpvorrichtung im Kühlmediumsammelbereich angeordnet ist, der im Betriebsfall geflutet ist, so dass die Pumpvorrichtung vollständig Kühlmedium eingetaucht ist und derart als Tauchpumpe oder Sumpfpumpe betrieben wird. Dies ist zwar nicht zwingend erforderlich, bessert jedoch die Fördereigenschaften der Pumpvorrichtung.

Ein Einsatzfall für das Reaktordruckbehälterkühlsystem ist ein Störfallszenario, bei dem eine Kernschmelze im Kernreaktor, also innerhalb des Reaktordruckbehälters eingetreten ist. Bisherige Kühlsysteme oder Notfallkühlsysteme beherrschen diesen Störfall nicht dauerhaft. Die Kernschmelze sammelt sich nämlich im geodätisch unteren Bereich des Reaktordruckbehälters und entfaltet dort eine vergleichsweise starke Wärmeentwicklung, die das Material beziehungsweise die Wandung des Reaktordruckbehälters materialtechnisch beansprucht. Mit dem erfindungsgemäßen Reaktordruckbehälterkühlsystem ist ein aktives Kühlsystem, also ein Kühlsystem mit einer Zwangsströmung, offenbart, welches insbesondere den von der Wärmeentwicklung im Reaktordruckbehälter unmittelbar betroffenen Bereich der Reaktordruckbehälterwand mit Kühlmedium beaufschlagt. Das Kühlmedium ist häufig Kühlwasser oder boriertes Kühlwasser. Der betreffende Wandbereich ist entsprechend gekühlt, so dass entsprechend mehr Wärme vom Reaktordruckbehälter wegtransportiert wird. Auf diese Weise ist ein unzulässiger Temperaturanstieg der Reaktordruckbehälterwand vermieden, der möglicherweise auch mit einem Verlust an Wandmaterial des Reaktordruckbehälters verbunden wäre. Eine erforderliche Wandstärke der Reaktordruckbehälterwand bleibt also vorteilhaft erhalten. Auch ein maximal zulässiger Wärmefluss über die Reaktordruckbehälterwand bleibt unterschritten. Beide Effekte tragen zum Erhalt der Integrität beziehungsweise Stabilität des Reaktordruckbehälters bei.

Dabei kann die Zwangsströmung grundsätzlich auf zwei möglichen Arten eingesetzt werden. Zum einen in der Art, dass das aus den Kühlmediumdüsen austretende Kühlmedium unmittelbar in Richtung der zu kühlenden Oberfläche des Reaktordruckbehälters gestrahlt wird. Zum andern in der Art, dass das aus den Kühlmediumdüsen austretende Kühlmedium in eine andere Richtung als in Richtung der zu kühlen Oberfläche des Reaktordruckbehälters gestrahlt wird, bevorzugt in die Richtung geodätisch nach unten. Eine besonders günstige Richtung für die zweite Art der Zwangsströmung lässt sich durch empirische Untersuchungen im Einzelfall für eine vorhandene Reaktordruckbehältergeometrie ermitteln oder mit einem Strömungsmodell für eine vorhandene Reaktordruckbehältergeometrie am Computer berechnen. Diese zweite Art soll auch mittelbare Zwangsströmung genannt werden.

Eine alternative Ausgestaltung des Reaktordruckbehälterkühlsystem ist dadurch gekennzeichnet, dass die Kühlmediumdüsen vollständig von Kühlmedium umgeben sind. Auf diese Weise ist sichergestellt, dass eine Zwangsströmung mit möglichst vorteilhaften Kühleffekten erzeugt ist. Der Volumenstrom der Zwangsströmung ist nämlich beim vollständigem Eintauchen der Kühlmediumdüsen in das Kühlmedium erhöht, da das umgebende Kühlmedium von dem Kühlmediumstrahl aus den Kühlmediumdüsen mitgerissen wird und so einen erhöhten Volumenstrom und damit einen ebenfalls erhöhten Kühleffekt auf den Reaktordruckbehälter bewirkt.

Bei einem vorteilhaft ausgestalteten Reaktordruckbehälterkühlsystem ist wenigstens ein Teil der Kühlmediumdüsen so ausgerichtet, dass das durch sie austretente Kühlmedium in Richtung Reaktordruckbehälter geleitet ist. Auf diese Weise ist ein bestimmter Oberflächenbereich des Reaktordruckbehälters, der beispielsweise besonders von der Wärmeentwicklung einer Kernschmelze unmittelbar betroffen ist, gezielt kühlbar, nämlich durch das unmittelbare Anstrahlen mit Kühlwasser. Auf diese Weise ist es besonders leicht möglich das Reaktordruckbehälterkühlsystem auf verschiedene Ausgestaltungen des Bodenbereichs des Reaktordruckbehälters anzupassen. Es gibt nämlich nicht nur klöpperbodenähnliche oder sphärische Formen von Reaktordruckbehälterböden, sondern auch elliptische Formen und weitere, zum Beispiel asymmetrische Bodenformen.

Bei einem Reaktordruckbehälterkühlsystem, das vorsieht, dass wenigstens ein Teil der Kühlmediumdüsen so ausgerichtet ist, dass das durch sie austretente Kühlmedium im Wesentlich in geodätischer Richtung nach unten geleitet ist, und dass durch die so entstehende mittelbare Zwangsströmung der Reaktordruckbehälter angeströmt ist. Auf diese Weise ist eine besonders einfache und robuste Zwangskühlung realisiert, wobei mit der mittelbaren Zwangsströmung praktisch der gesamte Oberflächenbereich des Reaktordruckbehälters, der in das Kühlmedium eingetaucht ist, kühlbar ist. Zudem ist der Kühleffekt unabhängig vom Flüssigkeitsstand des Kühlmediums im Sicherheitsbehälter jeweils im vorhandenen Kühlmedium gegeben.

In einer alternativen Ausgestaltung des Reaktordruckbehälterkühlsystems sind die Kühlmediumdüsen zu wenigstens einem Düsenring angeordnet. Zudem ist der wenigstens eine Düsenring um den geodätisch unteren Bodenbereich des Reaktordruckbehälters und/oder einem mittleren, geodätisch oberhalb vom Bodenbereich gelegenen Mittelbereich des Reaktordruckbehälters angeordnet. Auf diese Weise lassen sich bestimmte Oberflächenbereiche des Reaktordruckbehälters gezielt mit Kühlmedium anstrahlen und zudem die Menge oder der Volumenstrom von Kühlmedium für bestimmte Oberflächenbereiche durch die Auslegung der Kühlmediumdüsen und des wenigstens einen Düsenrings bestimmen. Es ist auch innerhalb des Erfindungsgedankens, dass einzelne Kühlmediumdüsen oder Gruppen von Kühlmediumdüsen eine unterschiedliche Auslegung haben, so dass eine unterschiedliche Menge von Kühlmedium bei einem durch die Pumpvorrichtung vorgegebenen Druck durch die Kühlmediumdüsen fließt.

Ein weiteres Reaktordruckbehälterkühlsystem sieht vor, dass durch die Pumpvorrichtung Kühlmedium zu weiteren Kühlmediumdüsen geleitet ist, mittels welcher weiterer Kühlmediumdüsen Kühlmedium geodätisch oberhalb des Kühlmediums im Sicherheitsbehälter bedarfsweise in die Luft im Sicherheitsbehälter versprühbar ist. Auf diese Weise wird dem oberhalb des Kühlmediums gelegenen Bereich im Sicherheitsbehälter zusätzlich Wärme entzogen und vom Kühlmedium aufgenommen. Auch der Reaktordruckbehälterbereich oberhalb des Kühlmediums ist so mit Kühlmedium besprühbar. Die Kühlleistung für den Reaktordruckbehälter ist hierdurch weiter erhöht.

Des Weiteren ist es für das Reaktordruckbehälterkühlsystem vorgesehen, dass zwischen der Pumpvorrichtung und den Kühlmediumdüsen ein Kühlmediumwärmetauschersystem angeordnet ist, mittels welchem Wärme von innerhalb des Sicherheitsbehälters nach außerhalb des Sicherheitsbehälters transportierbar ist. Derart ist ein zusätzliches Kühlsystem beziehungsweise Rückkühlsystem für das Kühlmedium geschaffen, dass zusätzlich zu den sowieso vorhandenen Wärmetauschern eines Sicherheitsbehälterkühlsystem arbeitet. Auf diese Weise wird auch die Rückkühlleistung des Kühlmediums weiter erhöht. Zudem ist die Temperatur des Kühlmediums welches durch die Zuleitung den Kühlmediumdüsen zugeführt wird durch wenigstens einen Kühlmediumwärmetauscher des Kühlmediumwärmetauschersystems verringert, so dass jedenfalls auch eine verbesserte Kühlleistung für die Reaktordruckbehälterwand bewirkt ist.

Dabei ist es auch möglich, dass das Kühlmediumwärmetauschersystem geodätisch oberhalb des Kühlmediumsammelbereiches angeordnet ist, so dass das Kühlmediumwärmetauschersystem im Betriebsfall geodätisch oberhalb des Kühlmediums angeordnet ist.

In einer weiteren vorteilhaften Ausgestaltung des Reaktordruckbehälterkühlsystems ist dadurch erreicht, dass der Sicherheitsbehälter eine Druckentlastungsvorrichtung aufweist, die mit einer Kühlmediumzufuhreinrichtung zusammenarbeitet, welche Kühlmediumzufuhreinrichtung von einer Stelle außerhalb des Sicherheitsbehälters Kühlmedium in einer Menge in den Sicherheitsbehälter einleitet, wie durch die Druckentlastungsvorrichtung Kühlmedium von innerhalb des Sicherheitsbehälters nach außerhalb gelangt. Auf diese Weise ist ein zusätzlicher Kühleffekt für das Kühlmedium erreichbar, in dem Kühlwasser verdampft und hierdurch Verdampfungswärme aufnimmt. Das verdampfte Kühlwasser wird durch die Druckentlastungsvorrichtung, gegebenenfalls unter Zwischenschaltung eines Filtersystems zur Zurückhaltung radioaktiver Stoffe nach außerhalb des Sicherheitsbehälters geleitet. Die durch Verdampfen reduzierte Kühlmediummenge wird entsprechend ergänzt durch die Zufuhr von Kühlmedium von einer Stelle außerhalb des Sicherheitsbehälters in den Sicherheitsbehälter hinein.

Als Pumpen oder Pumpenelemente für die Pumpvorrichtung kommen insbesondere Strahlpumpen, Kreiselpumpen, volumetrisch arbeitende Pumpen oder Kolbenpumpen in Betracht. Diese werden vorzugsweise von elektrisch oder hydraulisch betriebenen Antrieben oder von einer hydraulisch betriebenen Turbine angetrieben.

Vorteilhaft ist es, wenn eine Antriebsflüssigkeit des hydraulisch betriebenen Antriebs oder der hydraulisch betriebenen Turbine von einer Pumpe gefördert ist, die außerhalb des Sicherheitsbehälters angeordnet ist. Hierdurch ist sichergestellt, dass die Pumpe außerhalb des vom Störfall betroffenen Bereichs betrieben werden kann. Auf diese Weise ist es auch möglich die Pumpe als konventionell angetriebene Pumpe, zum Beispiel als elektrisch oder mit Verbrennungsmotor angetriebene Pumpe auszugestalten. Auch entsprechende Redundanzen für die Pumpe können dann auf besonders einfache Weise realisiert werden.

Zudem ist es vorteilhaft, wenn die Antriebsflüssigkeit das Kühlmedium für das Kühlmediumwärmetauschersystem ist. Die Kühlleistung des Reaktordruckbehälterkühlsystem mit nämlich weiter erhöht, ohne dass eine zusätzliche Pumpe für das Kühlmediumwärmetauschersystem erforderlich wäre.

Alle genannten Ausgestaltungen des Reaktordruckbehälterkühlsystems sind so auslegbar, dass die Kühlung des Reaktordruckbehälters so erhöht ist, dass diese ausreicht auch den Anfall von Wärme im Kernreaktor, zum Beispiel bei einer Kernschmelze, auch auf Dauer von zum Beispiel 3 bis 6 Monaten oder auch Jahre, abzutransportieren, so dass die Integrität des Reaktordruckbehälters entsprechend dauerhaft erhalten bleibt.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein erstes Beispiel für ein Reaktordruckbehälterkühlsystem,
- Fig. 2: ein zweites Beispiel für ein Reaktordruckbehälterkühlsystem,
- Fig. 3: ein drittes Beispiel für ein Reaktordruckbehälterkühlsystem sowie
- Fig. 4: ein viertes Beispiel für ein Reaktordruckbehälterkühlsystem.

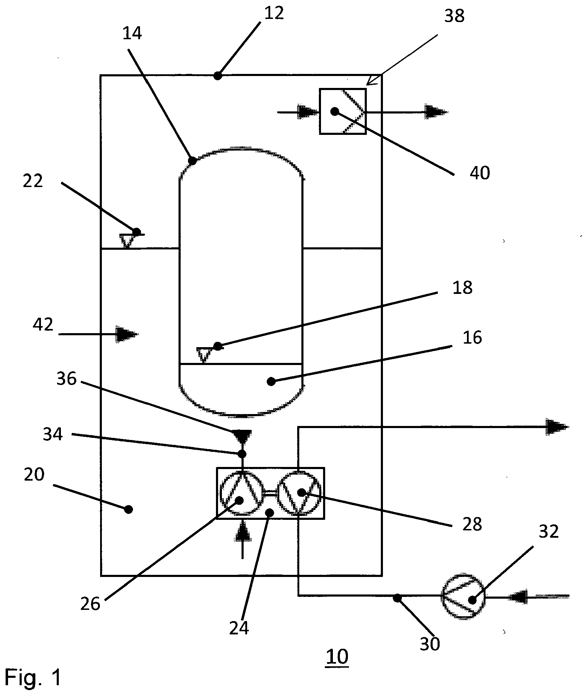

Fig. 1 zeigt in einem Beispiel ein erstes Reaktordruckbehälterkühlsystem 10 für einen Kernreaktor eines Kernkraftwerkes, bei dem in einem Sicherheitsbehälter 12 ein Reaktordruckbehälter 14 angeordnet ist. Die Skizze gemäß der Figur zeigt eine Systemsituation, bei dem im Reaktordruckbehälter 14 eine Kernschmelze eingetreten ist, was durch einen Sammelbereich 16 der Schmelzprodukte, die sich im geodätisch unteren Bereich des Reaktordruckbehälters 14 sammeln, gezeigt ist. Die Oberfläche des Sammelbereichs 16 ist durch ein erstes Oberflächensymbol 18 angedeutet. In einer solchen Störfallsituation im Kernreaktor ist ein Raumbereich zwischen dem Sicherheitsbehälter 12 und dem Reaktordruckbehälter 14 mit beispielsweise Kühlwasser als Kühlmedium durch ein Sicherheitsbehälterkühlsystem geflutet, so dass ein Kühlmediumsammelbereich 20 ausgebildet ist, dessen Füllstand im Sicherheitsbehälter 12 durch ein zweites Oberflächensymbol 22 angezeigt ist. Das Sicherheitsbehälterkühlsystem ist in dieser Figur jedoch nicht gezeigt. Jedoch ist es dessen Aufgabe die vom Kernreaktor an das Kühlwasser abgegebene Wärme, zum Beispiel die Nachzerfallswärme des Kernbrennstoffs, vom Kühlwasser beispielsweise mittels entsprechender Wärmetauscher aufzunehmen und zu einer Stelle außerhalb des Sicherheitsbehälters 12 zu transportieren. Das Sicherheitsbehälterkühlsystem ist jedoch nicht dafür ausgelegt, einen Störfall mit Kernschmelze zu beherrschen. Es dient lediglich dazu die im Kühlwasser vorhandene Wärme aus dem Sicherheitsbehälter 12 hinaus zu transportieren.

Für den hier gezeigten Störfall bei dem eine Kernschmelze eingetreten ist, konzentriert sich eine Wärmeentwicklung des Kernmaterials innerhalb des Reaktordruckbehälters 14 insbesondere im Sammelbereich 16. Von dort aus wird, aufgrund des treibenden Temperaturgefälles, ein Wärmestrom insbesondere durch das Material des Reaktordruckbehälters 14 in das Kühlwasser geleitet. Der vom Wärmestrom besonders belastete Teil des Reaktordruckbehälters 14 muss dabei vollständig vom Kühlwasser umgeben sein, um einen möglichst guten Wärmeübergang der Wärme an das Kühlwasser zu erreichen. Ein Temperaturanstieg, insbesondere einen unzulässigen Temperaturanstieg des Reaktordruckbehälters 14 in dem betroffenen Bereich ist durch das Reaktordruckbehälterkühlsystem zu vermeiden. Die Folgen eines unzulässigen Temperaturanstiegs wären zum Beispiel Verschlechterung der Material- und Stabilitätseigenschaften des Reaktordruckbehälters 14 bis hin zum Materialversagen, zum Beispiel Materialabtrag an der Reaktordruckbehälterwand oder Verringerung beziehungsweise Zerstörung der Integrität des Reaktordruckbehälters 14.

Im Kühlwassersammelbereich 22 als Kühlmediumsammelbereich ist eine Pumpvorrichtung 24 angeordnet, die vollständig von Kühlwasser umgeben ist. Die. Pumpvorrichtung 24 weist eine Kreiselpumpe 26 als Pumpenelement sowie eine hydraulische Antriebsturbine 28 auf, die auf einer gemeinsamen Welle angeordnet sind. Eine solche Pumpvorrichtung ist beispielsweise in der deutschen Patentanmeldung DE 10 2018 009 260 A1 näher erläutert. Dabei ist es auch innerhalb des Erfindungsgedankens, den Pumpenteil durch jede andere Pumpenart genauso wie den Antriebsteil durch jede andere Antriebsart zu ersetzen. Im gezeigten Beispiel jedoch ist die Antriebsturbine 28 durch eine Antriebsflüssigkeit nämlich Wasser angetrieben, dass durch eine Wasserleitung 30 mittels einer Pumpe 32 von einem Bereich außerhalb des Sicherheitsbehälters 12 zugeführt wird. Nach Durchströmen der Antriebsturbine 28 führt die Leitung 30 die Antriebsflüssigkeit wieder aus dem Sicherheitsbehälter 12 hinaus. Die Kreiselpumpe 26 wirkt als Sumpfpumpe und saugt Kühlwasser aus ihrer Umgebung im Kühlwassersammelbereich 20 an und fördert dieses über eine Zuleitung 34 zu einem Düsenkopf 36. Eine Düsenvorrichtung weist im gezeigten Beispiel also die Zuleitung 34 und den Düsenkopf 36 auf. Dabei ist der Düsenkopf 36 so auf die geodätisch unterste Stelle des Reaktordruckbehälters 14 gerichtet, dass diese Stelle vom ausströmenden Kühlwasser angeströmt ist und derart eine Zwangsströmung im Kühlwasser ausgebildet ist. In der Folge strömt die durch die Düsenvorrichtung ins Kühlwasser eingebrachte Zwangsströmung geodätisch im Wesentlichen von unten nach oben, so dass die Zwangsströmung insbesondere entlang einer Oberfläche eines Bodenbereichs des Reaktordruckbehälters 14 entlangströmt, welcher Bodenbereich in etwa bis zum ersten Oberflächensymbol 18 reicht. Im gezeigten Beispiel hat der Bodenbereich in etwa die Form eines Klöpperbodens. Geodätisch oberhalb dieses Bodenbereichs des Reaktordruckbehälters 14 schließlich ein mittlerer Bereich des Reaktordruckbehälters 14 an, dessen Teil der Oberfläche, die im Kontakt mit dem Kühlwasser steht, ebenfalls von der Zwangsströmung umströmt ist. Auf diese Weise ist der durch das Kühlwasser aufgenommene Wärmestrom, beziehungsweise die Kühlleistung des Reaktordruckbehälterkühlsystem, erheblich vergrö-βert im Vergleich zur Aufnahme von Wärme durch das ruhende Kühlwasser eines Sicherheitsbehälterkühlsystems. Die Ausgestaltung des Düsenkopfes 36 ist dabei nicht auf eine Einzeldüse beschränkt. Der Düsenkopf 36 kann nämlich eine Vielzahl Einzeldüsen als Kühlmediumdüsen aufweisen, welche die Zwangsströmung entsprechend dem Design des Reaktordruckbehälters 14 im Bodenbereich angepasst ist und eine möglichst optimale Zwangsströmung erzeugt, so dass ein größtmöglicher Wärmestrom vom Reaktordruckbehälter 14 aufnehmbar ist.

Ein besonderer Vorteil des Reaktordruckbehälterkühlsystem ist also eine gesteigerte Kühlung des Reaktordruckbehälters. Hierdurch wird jedoch auch mehr Wärme in das Kühlwasser eingetragen, so dass die Kühlwassertemperatur ansteigt. Zur Begrenzung des Kühlwassertemperaturanstiegs ist eine Druckentlastungsvorrichtung 38 vorgesehen, die geodätisch oberhalb der Kühlwasseroberfläche, also in der Figur oberhalb des zweiten Oberflächensymbols 22 angeordnet ist und Luft beziehungsweise Dampf aus dem Sicherheitsbehälter 12 hinaus in die Umgebung leitet. Auf diese Weise findet auch ein gewünschter Wärmetransport von Wärme innerhalb des sich als Behälters 12 in die Umgebung statt. Zur Rückhaltung von möglicherweise schädlichen oder radioaktiven Stoffen, die bei einem solchen Störfallszenario im Sicherheitsbehälter 12 vorhanden sein können, ist ein Filtersystem 40 in der Druckentlastungsvorrichtung 38 vorgesehen. Zudem ist zur Ergänzung von Kühlwasser, dass durch die Druckentlastungsvorrichtung 38 dem Sicherheitsbehälter 12 entnommen ist, eine Kühlwasserzufuhr 42 oder Kühlwasserzufuhrvorrichtung vorhanden, die in dem Maße Kühlwasser dem Sicherheitsbehälter 12 zuführt, wie durch die Druckentlastungsvorrichtung 38 entweicht.

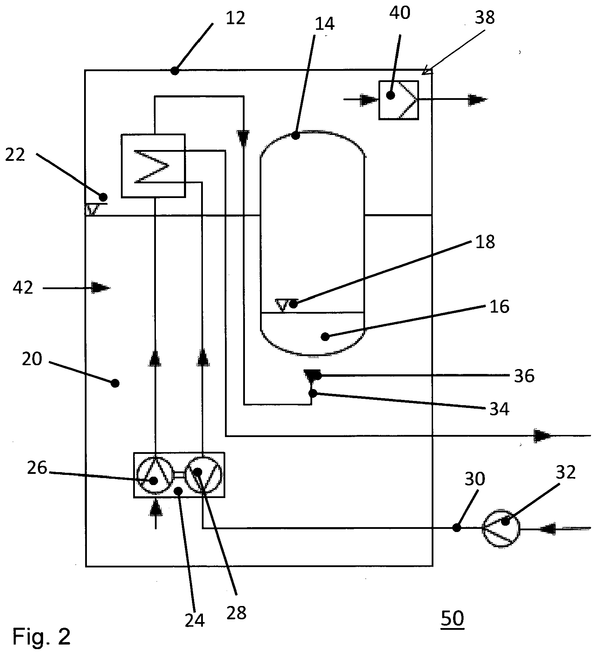

Fig. 2 zeigt in einem Beispiel ein zweites Reaktordruckbehälterkühlsystem 50 für einen Kernreaktor eines Kernkraftwerkes. Einige der Bauteile in dieser Skizze entsprechen den Bauteilen aus der Figur 1. Daher sind die vergleichbaren Bauteile in dieser Figur, aber auch in den weiteren Figuren, mit denselben Bezugszeichen versehen wie in Figur 1.

In Figur 2 fördert die Pumpvorrichtung 24 das Kühlwasser durch die Zuleitung 34 zunächst zu einem Wärmetauscher 52, der beispielsweise als Wasser/Wasser Wärmetauscher ausgestaltet ist, als Teil eines Kühlmediumwärmetauschersystems, dessen weitere Bauelemente und Teile in der Figur nicht näher dargestellt sind. Das Kühlwasser strömt nach Austritt aus dem Wärmetauscher 52 weiter zum Düsenkopf 36. Die Kühlung des Kühlwassers im Wärmetauscher 52 erfolgt durch die Antriebsflüssigkeit, beispielsweise Wasser, der Antriebsturbine 28 in dem die Wasserleitung 30 die aus der Antriebsturbine 28 ausströmende Antriebsflüssigkeit einer Rückkühlseite des Wärmetauschers 52 zuführt und die Antriebsflüssigkeit von dort wieder aus dem Sicherheitsbehälter 12 hinaus geleitet wird. Der Wärmetauscher 52 ist im gezeigten Beispiel zusätzlich zur Druckentlastungsvorrichtung 38 in das Reaktordruckbehälterkühlsystem eingebracht. Der Wärmetauscher 52 kann jedoch auch so ausgelegt sein, dass die durch den Reaktordruckbehälter in das Kühlwasser eingetragene Wärme vollständig durch den oder die Wärmetauscher aufgenommen und durch dessen Rückkühlung aus dem Sicherheitsbehälter 12 hinaus transportiert wird. In diesem Fall könnte die durch die Kühlwasserzufuhr 42 in den Kühlwassersammelbereich 20 zugeführte Kühlwassermenge stark reduziert werden oder sogar komplett entfallen.

Der Düsenkopf 36 ist in der gezeigten Skizze wiederum an derselben Stelle angeordnet wie in der Figur 1. Jedoch ist es ohne weiteres denkbar und innerhalb des Erfindungsgedankens, dass die Zuleitung 34 das Kühlwasser zu einer Vielzahl von Düsenelementen zu leiten, die das Kühlwasser auf verschiedenen Stellen der Oberfläche des Bodenbereichs oder des mittleren Bereichs des Reaktordruckbehälters 14 anströmen. D.h., dass die Anströmung des Reaktordruckbehälters 14 durch Kühlwasser nicht an einer Stelle erfolgen muss, sondern an einer Vielzahl von Stellen erfolgen kann, die beispielsweise auch ringförmig um den Bodenbereich des Reaktordruckbehälters 14 angeordnet sind oder auch in verschiedenen geodätisch beabstandeten Ebenen um den Bodenbereich oder den mittleren Bereich des Reaktordruckbehälters 14 herum angeordnet sind. Die Anordnung kann dabei ringförmig oder in anderen Anordnungsmustern erfolgen.

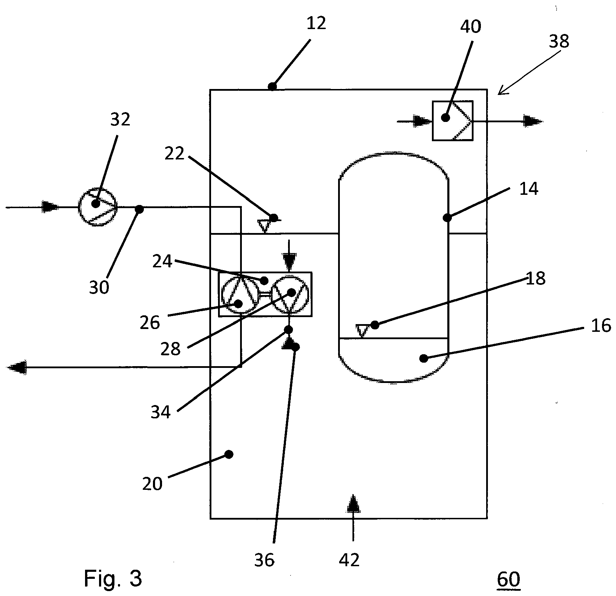

Die Fig. 3 zeigt ein Beispiel für ein drittes Reaktordruckbehälterkühlsystem 60, bei dem die Pumpvorrichtung 24 über die Zuleitung 34 wiederum Kühlwasser dem Düsenkopf 36 zuführt. Im Unterschied zu den zuvor gezeigten Beispielen ist der Kühlwasserstrahl aus dem Düsenkopf 36 jedoch nicht unmittelbar auf den Reaktordruckbehälter 14 gerichtet, sondern in geodätischer Richtung gesehen nach unten. Durch eine entsprechende Ausrichtung des Düsenkopfs 36 entsteht ebenfalls eine Zwangsströmung im Kühlwasser des Kühlwassersammelbereichs 20, die jedoch nicht unmittelbar nach Verlassen des Düsenkopfes den Reaktordruckbehälter 14 anstrahlt, sondern zunächst das Kühlwasser im Kühlwassersammelbereich 20 in Bewegung versetzt, so dass der Reaktordruckbehälter 14 mittelbar durch das in Bewegung versetzte Kühlwasser angestrahlt ist. Auch auf diese vorteilhafte Weise ist eine verbesserte Kühlung des Reaktordruckbehälters 14 erreicht.

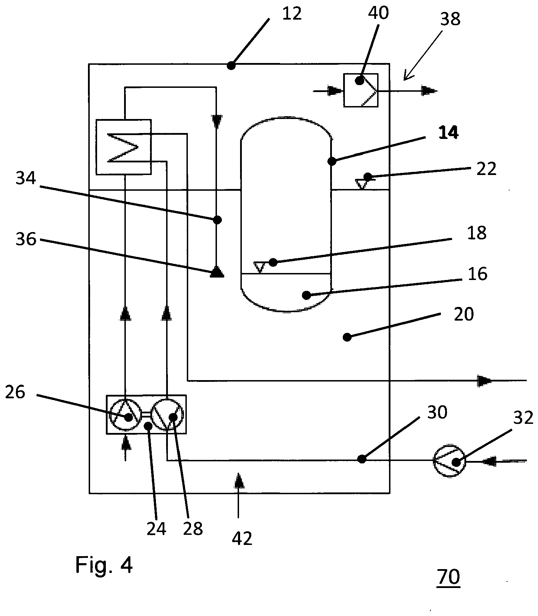

Die Fig. 4 zeigt ein Beispiel für ein viertes Reaktordruckbehälterkühlsystem 70, bei dem der Düsenkopf 36 wiederum nach unten gerichtet ist, so dass sich die in Figur 3 erläuterte indirekte oder mittelbare Zwangsströmung im Kühlwasser des Kühlwassersammelbereichs 20 ausbildet. Im Unterschied zur Figur 3 jedoch ist in der Zuleitung 34 wiederum der Wärmetauscher 52 zwischengefügt, so dass das durch die Zuleitung 34 dem Düsenkopf 36 zuströmende Kühlwasser zunächst gekühlt wird, bevor es aus den Düsenkopf 36 austritt. Der Wärmetauscher 52 ist in der Figur oberhalb des Kühlwasserspiegels des Kühlwassers gezeigt. Es ist aber auch genauso gut denkbar, dass der Wärmetauscher teilweise oder vollständig ins Kühlwasser eintaucht. Auch in diesem Fall ist die Kühlung des Kühlwassers vor der Zuleitung zum Düsenkopf 36 gewährleistet.

### Bezugszeichenliste

- 10: erstes Reaktordruckbehälterkühlsystem
- 12: Sicherheitsbehälter
- 14: Reaktordruckbehälter
- 16: Sammelbereich
- 18: erstes Oberflächensymbol
- 20: Kühlwassersammelbereich
- 22: zweites Oberflächensymbol
- 24: Pumpvorrichtung
- 26: Kreiselpumpe
- 28: Antriebsturbine
- 30: Wasserleitung
- 32: Pumpe
- 34: Zuleitung
- 36: erster Düsenkopf
- 38: Druckentlastungsvorrichtung
- 40: Filtersystem
- 42: Kühlwasserzufuhr
- 50: zweites Reaktordruckbehälterkühlsystem
- 52: Wärmetauscher
- 60: drittes Reaktordruckbehälterkühlsystem
- 70: viertes Reaktordruckbehälterkühlsystem
- 72: Pfeile

## Patentansprüche

1. Reaktordruckbehälterkühlsystem (10, 50, 60, 70) einer kerntechnischen Anlage mit einem abgeschlossenen Sicherheitsbehälter (12), wobei innerhalb des Sicherheitsbehälters (12) ein Reaktordruckbehälter (14) angeordnet ist, wobei sich innerhalb des Sicherheitsbehälters (12) ein Kühlmediumsammelbereich (20) zur Aufnahme eines Kühlmediums befindet, wobei zwischen dem Sicherheitsbehälter (12) und dem Reaktordruckbehälter (14) so viel Kühlmedium vorhanden ist, dass der Reaktordruckbehälter (14) zumindest teilweise vom Kühlmedium umgeben ist,
**dadurch gekennzeichnet,**
**dass** im Sicherheitsbehälter (12) eine Pumpvorrichtung (24) angeordnet ist, die vollständig im Kühlmedium eingetaucht ist, dass durch die Pumpvorrichtung (24) Kühlmedium einer Düsenvorrichtung zugeführt ist, dass die Düsenvorrichtung eine Anzahl von Kühlmediumdüsen aufweist, und dass die Kühlmediumdüsen so angeordnet sind, dass durch das durch die Kühlmediumdüsen strömende Kühlmedium eine Kühlmediumzwangsströmung im Kühlmedium des Kühlmediumsammelbereichs erzeugt ist, durch welche Kühlmediumzwangsströmung ein Oberflächenbereich des Reaktordruckbehälters angeströmt ist.

2. Reaktordruckbehälterkühlsystem (10, 50, 60, 70) nach Anspruch 1, **dadurch gekennzeichnet, dass** die Kühlmediumdüsen vollständig von Kühlmedium umgeben sind.

3. Reaktordruckbehälterkühlsystem (10, 50, 60, 70) nach Anspruch 1 öder 2, **dadurch gekennzeichnet, dass** wenigstens ein Teil der Kühlmediumdüsen so ausgerichtet ist, dass das durch sie austretente Kühlmedium in Richtung Reaktordruckbehälter (14) geleitet ist.

4. Reaktordruckbehälterkühlsystem (10, 50, 60, 70) nach einem der vorherigen Ansprüche, **dadurch gekennzeichnet, dass** wenigstens ein Teil der Kühlmediumdüsen so ausgerichtet ist, dass das durch sie austretente Kühlmedium im Wesentlich in geodätischer Richtung nach unten geleitet ist, und dass durch die so entstehende mittelbare Zwangsströmung der Reaktordruckbehälter (14) angeströmt ist.

5. Reaktordruckbehälterkühlsystem (10, 50, 60, 70) nach einem der vorherigen Ansprüche, **dadurch gekennzeichnet, dass** die Kühlmediumdüsen zu wenigstens einem Düsenring angeordnet sind, und dass der wenigstens eine Düsenring um den geodätisch unteren Bodenbereich des Reaktordruckbehälters (14) und/oder einem mittleren, geodätisch oberhalb vom Bodenbereich gelegenen Mittelbereich des Reaktordruckbehälters (14) angeordnet ist.

6. Reaktordruckbehälterkühlsystem (10, 50, 60, 70) nach einem der vorherigen Ansprüche, **dadurch gekennzeichnet, dass** durch die Pumpvorrichtung (24) Kühlmedium zu weiteren Kühlmediumsdüsen geleitet ist, mittels welcher weiterer Kühlmediumsdüsen Kühlmedium geodätisch oberhalb des Kühlmediums im Sicherheitsbehälter (12) bedarfsweise versprühbar ist.

7. Reaktordruckbehälterkühlsystem (10, 50, 60, 70) nach einem der vorherigen Ansprüche, **dadurch gekennzeichnet, dass** zwischen der Pumpvorrichtung (24) und den Kühlmediumdüsen ein Kühlmediumwärmetauschersystem angeordnet ist, mittels welchem Wärme von innerhalb des Sicherheitsbehälters (12) nach außerhalb des Sicherheitsbehälters (12) transportierbar ist.

8. Reaktordruckbehälterkühlsystem (10, 50, 60, 70) nach Anspruch 7, **dadurch gekennzeichnet, dass** das Kühlmediumwärmetauschersystem geodätisch oberhalb des Kühlmediumsammelbereiches angeordnet ist, so dass das Kühlmediumwärmetauschersystem im Betriebsfall geodätisch oberhalb des Kühlmediums angeordnet ist.

9. Reaktordruckbehälterkühlsystem (10, 50, 60, 70) nach einem der vorherigen Ansprüche, **dadurch gekennzeichnet, dass** der Sicherheitsbehälter (12) eine Druckentlastungsvorrichtung (38) aufweist, die mit einer Kühlmediumzufuhreinrichtung zusammenarbeitet, welche Kühlmediumzufuhreinrichtung von einer Stelle außerhalb des Sicherheitsbehälters (12) Kühlmedium in einer Menge in den Sicherheitsbehälter (12) einleitet, wie durch die Druckentlastungsvorrichtung (38) Kühlmedium von innerhalb des Sicherheitsbehälters nach außerhalb gelangt.

10. Reaktordruckbehälterkühlsystem (10, 50, 60, 70) nach einem der vorherigen Ansprüche, **dadurch gekennzeichnet, dass** die Pumpvorrichtung (24) als Pumpenelement (26) eine Strahlpumpe, eine Kreiselpumpe, eine volumetrisch arbeitenden Pumpe oder eine Kolbenpumpe aufweist, und dass das Pumpenelement (26) von einem elektrisch oder einem hydraulisch betriebenen Antrieb oder von einer hydraulisch betriebenen Turbine angetrieben ist.

11. Reaktordruckbehälterkühlsystem (10, 50, 60, 70) nach Anspruch 10, **dadurch gekennzeichnet, dass** eine Pumpe (32) als Fördervorrichtung für den elektrisch oder den hydraulisch betriebenen Antrieb oder für die hydraulisch betriebenen Turbine außerhalb des Sicherheitsbehälters (12) angeordnet ist.

12. Reaktordruckbehälterkühlsystem (10, 50, 60, 70) nach Anspruch 11, **dadurch gekennzeichnet, dass** eine Antriebsflüssigkeit der Pumpvorrichtung (24) das Kühlmedium für das Kühlmediumwärmetauschersystem ist.

## Claims

1. Reactor pressure vessel-cooling system (10, 50, 60, 70) of a nuclear installation, having a sealed containment vessel (12), wherein a reactor pressure vessel (14) is arranged within the containment vessel (12), wherein a cooling-medium-collecting region (20) for receiving a cooling medium is situated within the containment vessel (12), wherein, between the containment vessel (12) and the reactor pressure vessel (14), there is so much cooling medium present that the reactor pressure vessel (14) is at least partially surrounded by cooling medium,
**characterized**
**in that**, in the containment vessel (12), there is arranged a pump apparatus (24) which is completely immersed in the cooling medium, in that cooling medium is fed to a nozzle apparatus by way of the pump apparatus (24), in that the nozzle apparatus has a number of cooling-medium nozzles, and in that the cooling-medium nozzles are arranged in such a way that, by way of the cooling medium flowing through the cooling-medium nozzles, a cooling-medium forced flow is generated in the cooling medium of the cooling-medium-collecting region, by way of which cooling-medium forced flow a surface region of the reactor pressure vessel is flowed against.

2. Reactor pressure vessel-cooling system (10, 50, 60, 70) according to Claim 1, **characterized in that** the cooling-medium nozzles are completely surrounded by cooling medium.

3. Reactor pressure vessel-cooling system (10, 50, 60, 70) according to Claim 1 or 2, **characterized in that** at least a portion of the cooling-medium nozzles is oriented in such a way that the cooling medium emerging therethrough is directed in the direction of the reactor pressure vessel (14).

4. Reactor pressure vessel-cooling system (10, 50, 60, 70) according to one of the preceding claims, **characterized in that** at least a portion of the cooling-medium nozzles is oriented in such a way that the cooling medium emerging therethrough is directed substantially downwards in the geodetic direction, and **in that**, by way of the indirect forced flow thus generated, the reactor pressure vessel (14) is flowed against.

5. Reactor pressure vessel-cooling system (10, 50, 60, 70) according to one of the preceding claims, **characterized in that** the cooling-medium nozzles are arranged to form at least one nozzle ring, and **in that** the at least one nozzle ring is arranged around the geodetically lower bottom region of the reactor pressure vessel (14) and/or a central middle region of the reactor vessel (14), which middle region is situated geodetically above the bottom region.

6. Reactor pressure vessel-cooling system (10, 50, 60, 70) according to one of the preceding claims, **characterized in that**, by way of the pump apparatus (24), cooling medium is directed to further cooling-medium nozzles, by means of which further cooling-medium nozzles cooling medium is able to sprayed geodetically above the cooling medium in the containment vessel (12) according to requirement.

7. Reactor pressure vessel-cooling system (10, 50, 60, 70) according to one of the preceding claims, **characterized in that**, between the pump apparatus (24) and the cooling-medium nozzles, there is arranged a cooling-medium heat-exchanger system, by means of which heat is able to be transported from within the containment vessel (12) to outside the containment vessel (12).

8. Reactor pressure vessel-cooling system (10, 50, 60, 70) according to Claim 7, **characterized in that** the cooling-medium heat-exchanger system is arranged geodetically above the cooling-medium-collecting region, so that the cooling-medium heat-exchanger system is arranged geodetically above the cooling medium during operation.

9. Reactor pressure vessel-cooling system (10, 50, 60, 70) according to one of the preceding claims, **characterized in that** the containment vessel (12) has a pressure-relief apparatus (38) which interacts with a cooling-medium feed device, which cooling-medium feed device, from a point outside the containment vessel (12), introduces an amount of cooling medium into the containment vessel (12) according to cooling medium passing from within the containment vessel to the outside by way of the pressure-relief device (38).

10. Reactor pressure vessel-cooling system (10, 50, 60, 70) according to one of the preceding claims, **characterized in that** the pump apparatus (24) has a jet pump, a centrifugal pump, a volumetric pump or a piston pump as pump element (26), and **in that** the pump element (26) is driven by an electrically or a hydraulically operated drive or by a hydraulically operated turbine.

11. Reactor pressure vessel-cooling system (10, 50, 60, 70) according to Claim 10, **characterized in that** a pump (32) is arranged outside the containment vessel (12) as a conveying apparatus for the electrically or the hydraulically operated drive or for the hydraulically operated turbine.

12. Reactor pressure vessel-cooling system (10, 50, 60, 70) according to Claim 11, **characterized in that** a driving liquid of the pump apparatus (24) is the cooling medium for the cooling-medium heat-exchanger system.

## Revendications

1. Système de refroidissement de cuve de réacteur sous pression (10, 50, 60, 70) d'une installation nucléaire avec une cuve de sécurité fermée (12), une cuve de réacteur sous pression (14) étant agencée à l'intérieur de la cuve de sécurité (12), une zone de collecte d'agent de refroidissement (20) pour recevoir un agent de refroidissement se trouvant à l'intérieur de la cuve de sécurité (12), suffisamment d'agent de refroidissement étant présent entre la cuve de sécurité (12) et la cuve de réacteur sous pression (14) pour que la cuve de réacteur sous pression (14) soit entourée au moins partiellement par l'agent de refroidissement, **caractérisé en ce que**
un dispositif de pompage (24) est agencé dans la cuve de sécurité (12), lequel est entièrement immergé dans l'agent de refroidissement, **en ce que** de l'agent de refroidissement est amené par le dispositif de pompage (24) à un dispositif de buses, **en ce que** le dispositif de buses présente un nombre de buses d'agent de refroidissement, et **en ce que** les buses d'agent de refroidissement sont agencées de telle sorte que l'agent de refroidissement s'écoulant par les buses d'agent de refroidissement crée un écoulement forcé d'agent de refroidissement dans l'agent de refroidissement de la zone de collecte d'agent de refroidissement, écoulement forcé d'agent de refroidissement par lequel une zone de surface de la cuve de réacteur sous pression est balayée.

2. Système de refroidissement de cuve de réacteur sous pression (10, 50, 60, 70) selon la revendication 1, **caractérisé en ce que** les buses d'agent de refroidissement sont entièrement entourées d'agent de refroidissement.

3. Système de refroidissement de cuve de réacteur sous pression (10, 50, 60, 70) selon la revendication 1 ou 2, **caractérisé en ce qu'**au moins une partie des buses d'agent de refroidissement sont orientées de telle sorte que l'agent de refroidissement qui en sort est conduit en direction de la cuve de réacteur sous pression (14).

4. Système de refroidissement de cuve de réacteur sous pression (10, 50, 60, 70) selon l'une quelconque des revendications précédentes, **caractérisé en ce qu'**au moins une partie des buses d'agent de refroidissement sont orientées de telle sorte que l'agent de refroidissement qui en sort est conduit vers le bas dans une direction essentiellement géodésique, et **en ce que** la cuve de réacteur sous pression (14) est balayée par l'écoulement forcé indirect ainsi produit.

5. Système de refroidissement de cuve de réacteur sous pression (10, 50, 60, 70) selon l'une quelconque des revendications précédentes, **caractérisé en ce que** les buses d'agent de refroidissement sont agencées en au moins un anneau de buses, et **en ce que** l'au moins un anneau de buses est agencé autour de la zone de fond géodésiquement inférieure de la cuve de réacteur sous pression (14) et/ou d'une zone centrale de la cuve de réacteur sous pression (14) située géodésiquement au-dessus de la zone de fond.

6. Système de refroidissement de cuve de réacteur sous pression (10, 50, 60, 70) selon l'une quelconque des revendications précédentes, **caractérisé en ce que** le dispositif de pompage (24) conduit de l'agent de refroidissement vers d'autres buses d'agent de refroidissement, autres buses d'agent de refroidissement au moyen desquelles de l'agent de refroidissement peut être pulvérisé géodésiquement au-dessus de l'agent de refroidissement dans la cuve de sécurité (12) en cas de besoin.

7. Système de refroidissement de cuve de réacteur sous pression (10, 50, 60, 70) selon l'une quelconque des revendications précédentes, **caractérisé en ce qu'**un système d'échangeur de chaleur d'agent de refroidissement est agencé entre le dispositif de pompage (24) et les buses d'agent de refroidissement, au moyen duquel de la chaleur peut être transportée de l'intérieur de la cuve de sécurité (12) vers l'extérieur de la cuve de sécurité (12).

8. Système de refroidissement de cuve de réacteur sous pression (10, 50, 60, 70) selon la revendication 7, **caractérisé en ce que** le système d'échangeur de chaleur d'agent de refroidissement est agencé géodésiquement au-dessus de la zone de collecte d'agent de refroidissement, de telle sorte que le système d'échangeur de chaleur d'agent de refroidissement est agencé géodésiquement au-dessus de l'agent de refroidissement en fonctionnement.

9. Système de refroidissement de cuve de réacteur sous pression (10, 50, 60, 70) selon l'une quelconque des revendications précédentes, **caractérisé en ce que** la cuve de sécurité (12) présente un dispositif de décharge de pression (38) qui coopère avec un appareil d'amenée d'agent de refroidissement, lequel appareil d'amenée d'agent de fluide de refroidissement introduit de l'agent de refroidissement dans la cuve de sécurité (12) à partir d'un emplacement à l'extérieur de la cuve de sécurité (12) en une quantité telle que de l'agent de refroidissement passe de l'intérieur de la cuve de sécurité vers l'extérieur par le biais du dispositif de décharge de pression (38).

10. Système de refroidissement de cuve de réacteur sous pression (10, 50, 60, 70) selon l'une quelconque des revendications précédentes, **caractérisé en ce que** le dispositif de pompage (24) présente en tant qu'élément de pompage (26) une pompe à jet, une pompe centrifuge, une pompe volumétrique ou une pompe à piston, et **en ce que** l'élément de pompage (26) est entraîné par un entraînement électrique ou hydraulique ou par une turbine hydraulique.

11. Système de refroidissement de cuve de réacteur sous pression (10, 50, 60, 70) selon la revendication 10, **caractérisé en ce qu'**une pompe (32) est agencée à l'extérieur de la cuve de sécurité (12) en tant que dispositif de transport pour l'entraînement électrique ou hydraulique ou pour la turbine hydraulique.

12. Système de refroidissement de cuve de réacteur sous pression (10, 50, 60, 70) selon la revendication 11, **caractérisé en ce qu'**un liquide d'entraînement du dispositif de pompage (24) est l'agent de refroidissement pour le système d'échangeur de chaleur d'agent de refroidissement.
